**Europäisches Patentamt**

**European Patent Office**

**Office européen des brevets**

(19)

(11) Veröffentlichungsnummer : **0 297 032 B1**

(12) **EUROPÄISCHE PATENTSCHRIFT**

(45) Veröffentlichungstag der Patentschrift :
08.07.92 Patentblatt 92/28

(21) Anmeldenummer : 88810330.6

(22) Anmeldetag : 24.05.88

(51) Int. Cl.⁵ : **G01N 11/16**

(54) **Viskosimeter.**

(30) Priorität : **12.06.87 CH 2220/87**
**26.02.88 CH 730/88**

(43) Veröffentlichungstag der Anmeldung :
**28.12.88 Patentblatt 88/52**

(45) Bekanntmachung des Hinweises auf die
Patenterteilung :
**08.07.92 Patentblatt 92/28**

(84) Benannte Vertragsstaaten :
**AT CH DE ES FR GB IT LI NL SE**

(56) Entgegenhaltungen :
**FR-A- 2 435 707**
**GB-A- 2 001 761**
**GB-A- 2 071 324**
**US-A- 3 943 753**
**THE MARCONI REVIEW, Band 43, Nr. 218,**
**1980, Seiten 156-175, Rugby, GB; R.M. LANG-**
**DON: "Vibratory process control transdu-**
**cers"**
**THE REVIEW OF SCIENTIFIC INSTRUMENTS,**
**Band 42, Nr. 2, Februar 1971, Seiten 224-232,**
**New York, US; J.L. SCHRAG et**
**al.:"Application of the birnboim multiple lum-**
**ped resonator principle to viscoelastic measu-**
**rements of dilute macromolecular solutions"**

(56) Entgegenhaltungen :
**JOURNAL OF APPLIED PHYSICS, Band 49, Nr.**
**3, März 1978, Seiten 1070-1076, American In-**
**stitute of Physics, New York, US; W.H.ROBIN-**
**SON et al.: "Piezoelectric method of**
**determining viscosity at 40 kHz"**

(73) Patentinhaber : **Dual, Jürg**
**Bergstrasse 5**
**CH-8044 Zürich (CH)**
Patentinhaber : **Sayir, Mahir, Prof.Dr.**
**Im Sträler 7**
**CH-8047 Zürich (CH)**
Patentinhaber : **Goodbread, Joseph, Dr.**
**Grossmannstrasse 34**
**CH-8049 Zürich (CH)**

(72) Erfinder : **Dual, Jürg**
**Bergstrasse 5**
**CH-8044 Zürich (CH)**
Erfinder : **Sayir, Mahir, Prof.Dr.**
**Im Sträler 7**
**CH-8047 Zürich (CH)**
Erfinder : **Goodbread, Joseph, Dr.**
**Grossmannstrasse 34**
**CH-8049 Zürich (CH)**

(74) Vertreter : **White, William et al**
**Patentanwalts-Bureau Isler AG Postfach 6940**
**CH-8023 Zürich (CH)**

## Beschreibung

Aus einem Artikel von John L. Schrag und Robert M. Johnson in "The Review of Scientific Instruments", Vol. 42, Nr, 2, Februar 1971, Seite 224, ist ein Viskosimeter bekannt. Ein Resonator, im beschriebenen Beispiel ein Rotationskörper mit mehreren in Serie längs seiner Achse angeordneten Schwungmassen und Torsionsfedern, wird durch einen Oszillator im Bereich einer seiner Eigenfrequenzen angeregt. Dabei wird diese Frequenz variiert und zu jeder eingestellten Oszillatorfrequenz der Phasenwinkel zwischen der Oszillatorschwingung und der Drehschwingungsamplitude des Resonators bestimmt. Aus der dabei gewonnenen Kurve kann dann die Dämpfung und damit die Viskosität des Fluids ermittelt werden. Diese bekannte Vorrichtung erfordert einen hohen apparativen Aufwand und ergibt trotzdem nur eine bescheidene Genauigkeit, ausserdem in einem recht eng beschränkten Viskositätsbereich. Sie ist allenfalls für Laboruntersuchungen geeignet, für die kontinuierliche Messung in Produktionsprozessen jedoch nicht brauchbar.

Eine weitere Messvorrichtung zur Bestimmung der Viskosität ist in einem Artikel von William H. Robinson im "Journal of Applied Physics", Vol. 49, March 1978, Seiten 1070 ff. beschrieben. Hier wird ein als zylindrischer Quarzstab ausgebildeter Resonator in seiner Torsions-Eigenfrequenz durch einen piezoelektrischen Wandler erregt. Ein zweiter Wandler misst die Schwingungsamplitude und die Frequenzänderung infolge des Fluids. Der Resonatorstab ist zur Hälfte in die zu messende Flüssigkeit eingetaucht. In seinem Schwingungsknoten ist er mittels eines O-Rings gegenüber dem die Flüssigkeit enthaltenden Gefäss abgedichtet. Auch diese Vorrichtung ist hauptsächlich zur Messung unter Laborbedingungen geeignet. Die Auswertung der Messung ist aufwendig und erfordert Eichmessungen in Flüssigkeiten bekannter Viskosität.

Aus den US-Patenten 4 005 599 und 3 986 388 sind weitere Viskosimeter bekannt. In einem rohrförmigen Gehäuse ist ein zylindrischer an beiden Enden balliger Rotationskörper an vier Biegefedern aufgehängt. Im Körper verläuft quer zu seiner Achse ein Stabmagnet. Ueber am Gehäuse angebrachte Spulen kann der Körper benachbart seiner Eigenfrequenz zum Schwingen angeregt werden. An den Federn ist ein Fühler zum Messen der Schwingung angebracht. Das Signal dieses Fühlers wird in einem geschlossenen Kreis auf die Erregung der Spulen zurückgeführt, so dass der Rotationskörper eine Eigen schwingung ausführt. Ueber einen Phasenschieber kann in den Rückkoppelungskreis eine Phasenverschiebung eingeschaltet werden. Aus dem Unterschied der Schwingungsfrequenz bei ein -und ausgeschalteter Phasenverschiebung kann die Dämpfung des Resonators und bei entsprechender Eichung die Viskosität des Fluids im Spalt zwischen Gehäuse und Rotationskörper bestimmt werden. Diese Viskosimeter haben sowohl von der Schwingungserregung her als auch im mechanischen Schwingungssystem starke Rückkoppelungen, sodass nebst der Dämpfung durch das Fluid noch unbekannte und nicht berechenbare Dämpfungen im Rückkoppelungskreis und in Gehäuseschwingungen mitgemessen werden. Zuverlässige Messungen sind daher nur mit Eichungen möglich. Das Gerät ist für chargenweisen Betrieb, also eher für Laborbedingungen geeignet. Ein weiteres Viskosimeter mit einem Phasenschieber im Rückkoppelungspfad eines Resonators ist aus "The Review of Scientific Instruments", vol. 46, Nr. 11, Nov. 1975, S. 1560 ff. bekannt. Der Resonator ist hier eine schwingende Saite. Auch dieser Vorschlag ist eher für Laborbedingungen und für einen beschränkten Viskositätsbereich bei bekannter Fluiddichte gedacht.

Der vorliegenden Erfindung liegt die Aufgabe zugrunde, ein Viskosimeter zu schaffen, mit welchem die Viskosität eines Fluids in einem weiten Bereich rasch und präzis gemessen werden kann und das sich auch zur Anwendung in industriellen Prozessen eignet. Diese Aufgabe wird durch die kennzeich nenden Merkmale des Anspruchs 1 gelöst.

Nachfolgend werden Ausführungsbeispiele der Erfindung anhand der Zeichnung erläutert. Darin zeigt:

Fig. 1 einen Längsschnitt durch eine Sonde,

Fig. 2 eine Stirnansicht eines Wandlers,

Fig. 3 ein Polardiagramm des Frequenzgangs der Sonde,

Fig. 4 ein Schema der an die Sonde angeschlossenen Schaltung,

Fig. 5 eine Variante eines Details des Schlaltkreises nach Fig. 4

Fig. 6 bis Fig. 8 Längsschnitte durch drei Varianten der Sonde nach Fig. 1,

Fig. 9 bis Fig. 11 drei weitere Varianten von Schwingungserregern,

Fig. 12 eine weitere Ausführungsform des Resonators,

Fig. 13 bis Fig. 15 Varianten der wirksamen Resonatoroberfläche,

Fig. 16-18 die Ausbildung des Resonators für besondere Anwendungsfälle,

Fig. 19 eine weitere Ausführungsform des Resonators, und

Fig. 20 eine weitere Anwendung, und

Fig. 21 eine weitere Ausführungsform eines Wandlers.

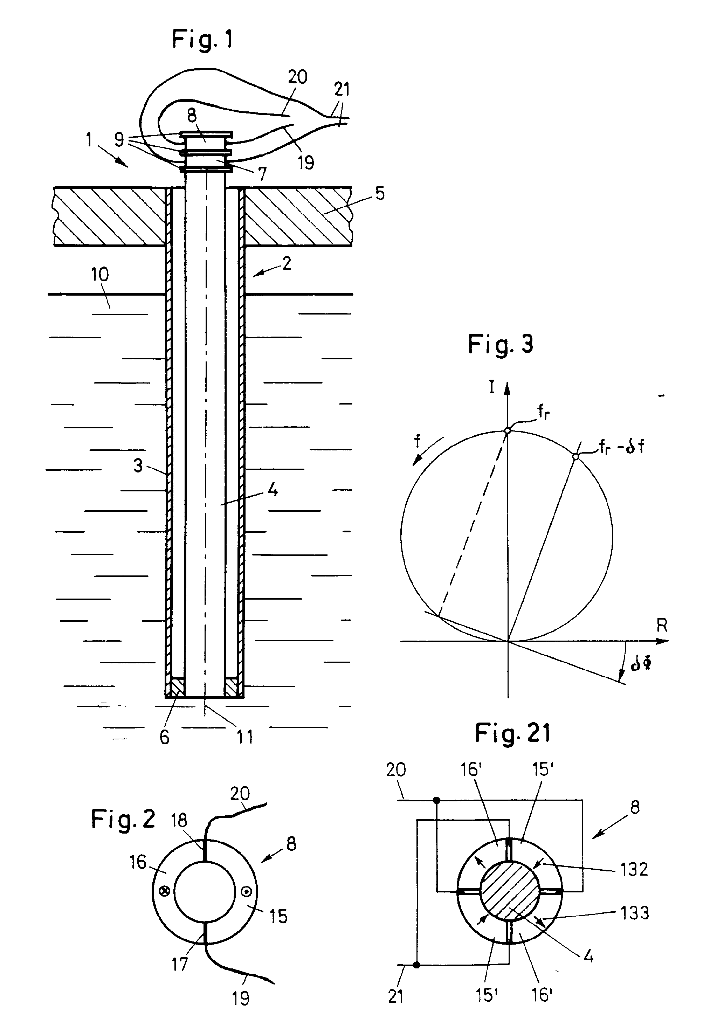

In Fig. 1 ist die für die Messung der Viskosität verwendete Messonde dargestellt. Sie besteht aus einem Resonator 2 umfassend ein kreiszylindrisches Rohr 3 und einen koaxialen zylindrischen Stab 4. Das eine Ende des Rohres 3 ist in einem massiven Gehäuseboden 5 eingespannt, z.B. hartverlötet. Das gegenüberliegende Rohrende ist über einen Ring 6 gasdicht starr mit dem einen Ende des Stabes 4 verbunden, z.B. ebenfalls hartverlötet. Am gegenüberliegenden Stirnende ist stirnseitig auf den Stab 4 ein koaxialer piezoelektrischer Fühler 7 und auf diesen ein ebenfalls koaxialer piezoelektrischer Wandler 8 aufgeklebt. Fühler 7 und Wandler 8 sind voneinander und vom Stab 4 durch Isolierplättchen 9 isoliert. Das Rohr 3 ist in das zu messende Fluid 10, z.B. eine Flüssigkeit, eingetaucht.

In Fig. 2 ist eine Stirnansicht des Wandlers 8 dargestellt. Er besteht aus zwei halbringförmigen, piezoelektrischen, keramischen Scheiben 15, 16, die entgegengesetzt polarisiert sind. Die einander zugewandten ebenen Flächen der Scheiben 15, 16, sind mit einer elektrisch leitenden Schicht 17, 18 versehen und elektrisch leitend miteinander verbunden. An die Schichten 17, 18 ist je ein Leiter 19, 20 angeschlossen. Wird an die Leiter 19, 20 eine Spannung angelegt, so verzerrt sich der Wandler 8, so dass sich seine beiden Stirnflächen gegeneinander um einen Winkel um die Achse 11 der Sonde 1 verschieben. Durch Anlegen einer Sinusspannung an die Leiter 19, 20 wird dem Resonator 2 eine Torsionsschwingung um seine Achse 11 aufgezwungen.

Der Fühler 7 ist gleich aufgebaut wie der Wandler 8. Hier bewirkt die Scherspannung an den beiden Halbringen eine Ausgangsladung an den an den Halbringen angeschlossenen Leitern 21.

In Fig. 3 ist zur Erläuterung des Grundprinzips des Dämpfungsmess-Verfahrens der Frequenzgang der Sonde 1 dargestellt. In Abszissenrichtung R ist der Realteil, in Ordinatenrichtung I der Imaginärteil der Uebertragungsfunktion, d.h. des Verhältnisses von Ausgangsauslenkung zu Eingangsmoment in der Form $e^{i\omega t}$ aufgetragen. Mit der Schwingungsfrequenz f als Parameter ergibt sich für die Sonde 1 bei geringer Dämpfung als Ortskurve annähernd ein Kreis durch den Ursprung des Koordinatensystems mit dem Mittelpunkt auf der Ordinate I. Der Schnittpunkt $f_r$ der Ortskurve mit der Ordinate I definiert die Resonanzfrequenz des Resonators 2 mit einer Phasenverschiebung zwischen Ein- und Ausgangsschwingung von 90°. Der Abstand des Schnittpunktes $f_r$ vom Ursprung ist abhängig von der Dämpfung des Resonators 2.

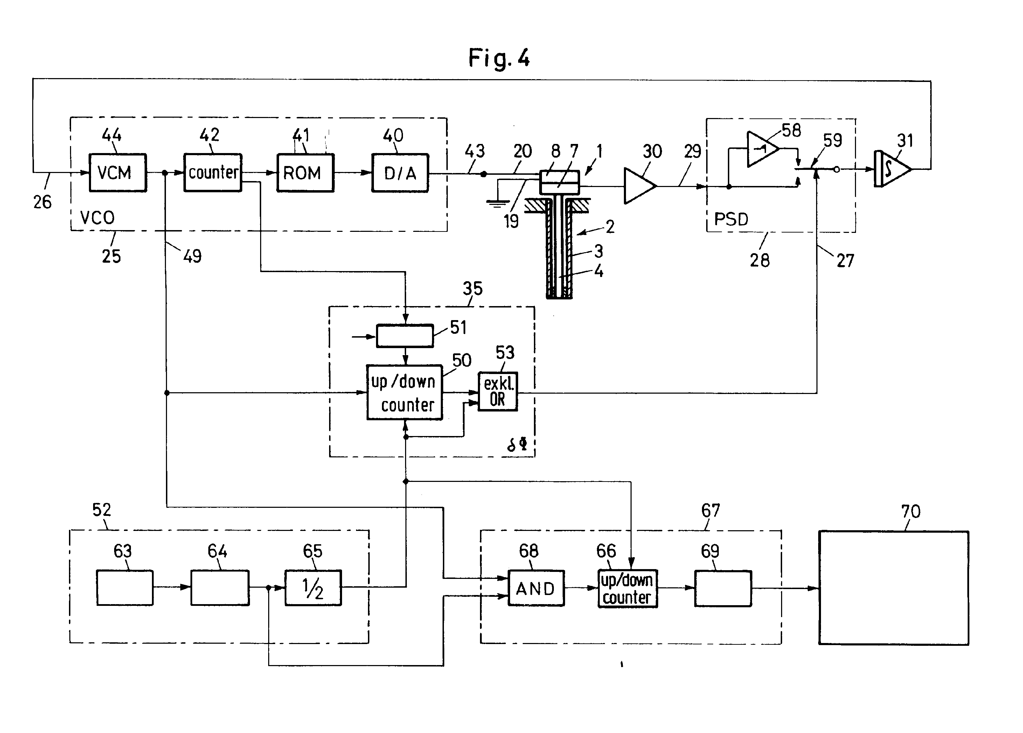

Wie in Fig. 4 dargestellt ist, wird die an die Leiter 19, 20 des Erregers 8 angelegte Sinusspannung durch einen Oszillator 25 erzeugt. Eine Steuerspannung am Eingang 26 des Oszillators 25 steuert die Schwingungsfrequenz. Ein Ausgang des Oszillators 25 ist ausserdem an den einen Eingang 27 eines phasenempfindlichen Detektors PSD 28 angeschlossen. Dessen anderer Eingang 29 ist über einen Verstärker 30 mit dem Fühler 7 verbunden. Der PSD 28 liefert eine Ausgangsspannung proportional zum Realteil des Verhältnisses zwischen Ausgang und Eingang des Resonators 2. Die Ausgangsspannung des PSD 28 wird in einem Integrator 31 integriert und zum Steuereingang 26 des Oszillators 25 rückgekoppelt. Durch diese integrierende Rückkopplung wird erreicht, dass der Ausgang des PSD 28 null ist, dass also die Schwingungsfrequenz genau auf die Eigenfrequenz $f_r$ stabilisiert wird.

Wird nun mittels eines Phasenschiebers 35 das Signal vom Oszillator 25 zum Eingang 27 des PSD 28 um einen vorgegebenen Winkel $\delta\Phi$ phasenverschoben, entspricht dies in Fig. 3 einer Drehung des Koordinatensystems um den Winkel $\delta\Phi$. Der Ausgang des PSD 28 bei der Resonanzfrequenz $f_r$ ist in diesem Fall proportional zur Projektion des Punktes $f_r$ der Ortskurve auf die gedrehte Abszisse. Durch die Rückkoppelung wird nun der Ausgang des PSD 28 so lange aufintegriert und die Frequenz des Oszillators 25 entsprechend verstellt, bis der Ausgang des PSD 28 und damit auch der Realteil im gedrehten Koordinatensystem wieder null ist. Der Oszillator 25 schwingt nun auf der Frequenz $f_r$ - $\delta f$.

Für kleine Phasenverschiebungen ist das Verhältnis der Frequenzverschiebung zur Phasenverschiebung proportional zur Dämpfung des Resonators 2. Wenn deshalb die Schwingungsfrequenz bei zwei diskreten, vorgegebenen Werten der Phasenverschiebung $\delta\Phi$ im Phasenschieber 35 gemessen wird (z.B. den Werten $\pm\delta\Phi$), kann aus dem Frequenzunterschied unmittelbar die Dämpfung des Resonators berechnet werden. Wenn der Resonator 2 in das zu messende Fluid 10 eingetaucht ist, ist seine Dämpfung eine stetige Funktion der Zähigkeit des Fluids. Das im Fluid parallel zu seiner Oberfläche schwingende Rohr 3 der Sonde 1 bewirkt nämlich eine mitschwingende Grenzschicht, deren Schubspannung proportional zur Oberflächengeschwindigkeit des Rohres 3 ist und damit als Dämpfung wirkt.

Der Oszillator 25 umfasst einen digitalen Funktionsgenerator und einen daran angeschlossenen Digital-Analog-Wandler 40. In einem Lesespeicher (ROM) 41 sind die Werte einer Sinusfunktion mit z.B. 256 Intervallen an sequentiellen Adressen gespeichert. Indem diese Adressen der Reihe nach mit dem Ausgang eines achtstelligen Binärzählers abgefragt werden, steht am Eingang des Wandlers 40 ein Sinus an, der im Wandler in eine analoge Ausgangsspannung am Ausgang 43 umgeformt wird. Der Zähler 42 wird von einem als spannungsgesteuerten Multivibrator ausgebildeten Taktgeber 44 mit einer Frequenz betrieben, die 256 mal höher ist als die gewünschte Ausgangsfrequenz. Der Eingang des Taktgebers 44 ist der Steuereingang 26 des Oszillators 25. Der Vorteil der beschriebenen Ausbildung des Oszillators 25 besteht darin, dass sein Sinusausgang direkt von einer Rechteckschwingung abgeleitet ist, ohne dass Phasenverschiebungen auftreten können, wie dies z.B. bei Verwendung von Filterkreisen der Fall ist. Ausserdem wird dadurch auf einfache Weise ein exakt zum Sinusausgang phasengleich synchroner Digital-Ausgang ermöglicht. Dadurch wird es möglich, den Phasenschieber 35 digital auszubilden.

Im vorliegenden Ausführungsbeispiel hat der Phasenschieber 35 einen ebenfalls achtstelligen Binärzähler 50, der die am zweiten Ausgang 49 des Oszillators 25 anstehenden Pulse des Taktgebers 44 zählt. Die höchste Binärstelle des Zählers 50 liefert eine exakt synchron mit dem Sinusausgang des Oszillators 25 schwingende Rechteckspannung. Eine Phasenverschiebung kann nun eingeführt werden, indem dem Zähler 50 beim Start jedes neuen Zählzyklus des Zählers 42 (wenn also dessen Ausgang auf 00000000 steht) über eine Vorwahleinheit 51 ein Anfangswert eingegeben wird. Wenn der Anfangswert n ist und die Sinusschwingungen aus 256 Zwischenwerten pro Periode bestehen, ist die Phasenverschiebung n x 360°/256. Um eine zur Resonanzfrequenz symmetrische Phasenverschiebung zu erreichen, wird die Zählrichtung des Zählers 50 durch einen unabhängigen Rechteck-Oszillator 52 gesteuert, der mit einer sehr viel tieferen Frequenz $f_m$ als die Schwingungsfrequenz der Sonde 1 schwingt. Wenn der Ausgang des Oszillators 52 hoch ist, zählt der Zähler 50 vorwärts. Wenn der Ausgang des Oszillators 52 tief ist, zählt der Zähler 50 rückwärts. Dem Zähler 50 ist ein EXCL OR-Glied 53 nachgeschaltet, dessen zweiter Eingang mit dem Ausgang des Oszillators 52 verbunden ist. Durch diese Ausbildung ist der Ausgang des Phasenschiebers 35 exakt synchron zum Ausgang des Oszillators 25 und um einen genau definierten Winkel in der Phase abwechselnd mal positiv, mal negativ verschoben. Je nach Ausbildung des Fühlers 7, d.h. je nachdem ob dieser den Winkel, die Winkelgeschwindigkeit oder die Winkelbeschleunigung misst, kann mit der Vorwahleinheit 51 zusätzlich eine Phasenverschiebung von 90° oder 180° mitberücksichtigt werden.

Der phasenempfindliche Detektor 28 umfasst einen Inverter 58 und einen elektronischen Umschalter 59. Das über den Verstärker 30 an den Eingang 29 des Detektors 28 angelegte Signal des Fühlers 7 ist einerseits direkt, andererseits über den Inverter 58 mit dem Schalter 59 verbunden. Dieser wird durch das Signal am Eingang 27, d.h. durch den Ausgang des Phasenschiebers 35 geschaltet. Wenn der digitale Eingang 27 des Detektors 28 vom Phasenschieber 35 um 90° gegenüber der Sinusschwingung am Eingang 29 phasenverschoben ist, ist der mittlere Ausgang des Schalters 59 null. Weicht hingegen die Phasenverschiebung ab, so wird die Ausgangsspannung des Schalters 59 im Integrator 31 aufintegriert und über den Taktgeber 44 die Frequenz derart nachgestellt, dass die Phasenverschiebung exakt 90° beträgt.

Zur Auswertung der Messung werden die Impulse des Taktgebers 44 über gleiche Zeitspannen bei den beiden Werten der Phasenverschiebung gezählt. Die Differenz dieser Zählung ist proportional zum Frequenzunterschied δf, also zur Dämpfung des Resonators 2. Damit die Zeitspannen der Zählung exakt gleich sind, enthält der Oszillator 52 ein stabiles Frequenznormal 63, z.B. einen Quarzschwinger. Die Frequenz dieses Normals wird mit einem Zähler 64 heruntergeteilt. In einer weiteren Zählstufe 65 wird die Ausgangsfrequenz des Zählers 64 nochmals halbiert. Der Ausgang der Stufe 65 schwingt mit der Frequenz $f_m$ und bestimmt die Zählrichtung des Zählers 50 sowie eines weiteren Vorwärts-Rückwärts-Zählers 66 der Auswertschaltung 67. Dem Eingang des Zählers 66 ist ein UND-Glied 68 vorgeschaltet, dessen einer Eingang mit dem Ausgang des Zählers 64 und dessen anderer Eingang mit dem Ausgang 49 des Taktgebers 44 verbunden ist. Durch diese Ausbildung werden die Pulse des Taktgebers 44 im Zähler 66 jeweils erst in der zweiten Hälfte einer Halbschwingung des Ausgangs des Oszillators 52 gezählt. Damit steht nach dem Umschalten der Phasenverschiebung vom einen Wert zum andern hinreichend Zeit für den Einschwingvorgang zur Verfügung. Der Zähler 66 wird jeweils bei der absteigenden Flanke des Ausgangs des Oszillators 52 auf null zurückgestellt, nachdem der Zählerinhalt in einen Speicher 69 eingelesen wurde. Der im Speicher 69 gespeicherte Wert kann z.B. an einer Digitalanzeige 70 angezeigt werden. Es ist jedoch auch möglich, statt der Anzeige 70 einen Rechner anzuordnen, der aus dem Inhalt des Speichers 69 direkt die gemessene Viskosität des Fluids 10 ermittelt. In diesem Rechner kann z.B. die Kennlinie der Sonde 1 im interessierenden Viskositätsbereich durch ein angenähertes Polynom gespeichert sein. Die Kennlinie kann analytisch nach den Navier-Stokes'schen Gleichungen berechnet werden.

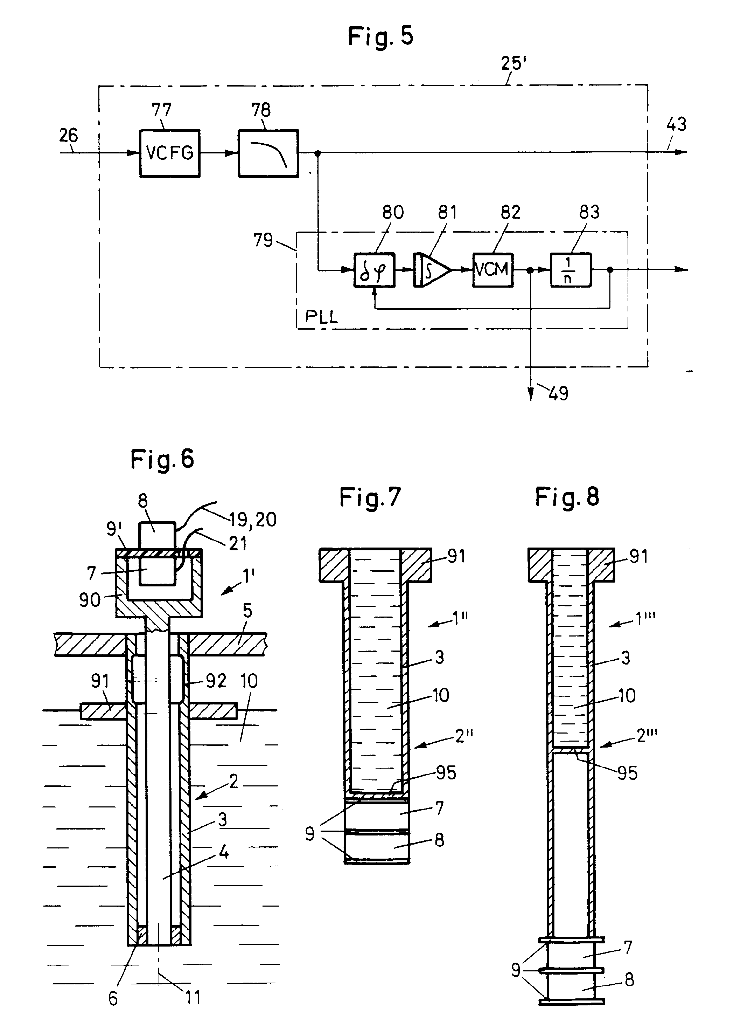

In Fig. 5 ist eine Variante mit einem Oszillator 25' in Analogschaltung dargestellt. Er umfasst einen spannungsgesteuerten Funktionsgenerator 77, dessen Frequenz von der Spannung am Eingang 26 abhängt. Die Sinusausgangsspannung solcher im Handel erhältlicher Funktionsgeneratoren ist für den vorliegenden Zweck zu wenig rein. Dies würde am Resonator 2 Oberschwingungen mitanregen, die zu Messfehlern führen würden. Aus diesem Grunde ist dem Generator 77 ein Tiefpassfilter 78 nachgeschaltet. Da im Filter 78 eine frequenzabhängige Phasenverschiebung auftritt, wird die zum Ausgang 43 des Oszillators 25 phasenrichtig synchrone Rechteckspannung über einen phasenverketteten Kreis PLL (Phase Locked Loop) 79 erzeugt. Der PLL 79 besteht aus einem phasenempfindlichen Detektor 80, einem Integrator 81, einem spannungsgesteuerten Multivibrator 82 und einem Frequenzteiler 83. Die Flanken seines Ausgangs dienen der Synchronisation des Phasenschiebers 35 analog dem Ausgang des Zählers 42 in Fig. 4. Der Ausgang 49 des Multivibrators 82 ist analog dem Ausgang 49 des Multivibrators 44 in Fig. 4 an den Zähleingang des Phasenschiebers 35 und der Auswertschaltung 67 angelegt. Der Ausgang des Frequenzteilers 83 ist phasenrichtig synchron zum Sinusausgang 43.

In Fig. 6 ist eine Variante der Sonde 1 dargestellt. Diese unterscheidet sich zum einen in der Anordnung des Wandlers 8 und des Fühlers 7. Am Stirnende des Stabes 4 ist hier ein koaxialer, glockenförmiger Ansatz 90 angeformt. Das Isolierplättchen 9′ ist auf die Stirnseite des Ansatzes 90 aufgeklebt und Wandler 8 und Fühler 7 sind zu beiden Seiten auf das Plättchen 9 aufgeklebt. Während bei der Ausführungsform nach Fig. 4 der Fühler 7 neben der Winkelbeschleunigung des Stabes das vom Wandler 8 auf den Stab 4 übertragene Moment misst, ist der Fühler 7 im Ausführungsbeispiel nach Fig. 6 im wesentlichen ein reiner Beschleunigungsmesser. Er hat den Vorteil geringerer Uebersprecheffekte.

Ausserdem ist bei der Sonde 1 nach Fig. 6 am Rohr 3 benachbart dem Gehäuseboden 5 eine rotationssymmetrische Schwungmasse 91 befestigt. Das Rohr 3 hat zwischen der Schwungmasse 91 und dem Boden 5 einen Hals 92 mit verminderter Torsionssteifigkeit. Diese Ausführung ist besonders zweckmässig, wenn sehr geringe Zähigkeitswerte des Fluids 10 gemessen werden sollen, weil bei geringer Dämpfung des Resonators 2 die auf das Gehäuse übertragenen und dort unkontrollierbar gedämpften Schwingungen stören. Die Schwungmasse 91 isoliert den Resonator 2 vom Gehäuseboden 5.

Bei der in Fig. 7 dargestellten Variante besteht der Resonator 2 der Sonde 1 bloss aus dem Rohr 3, das unten durch einen Boden 95 abgeschlossen ist. Auf den Boden 95 sind die Isolierplättchen 9, der Fühler 7 und der Wandler 8 aufgeklebt. Am oberen Ende des Rohres 3 ist wiederum eine Schwungmasse 91 angebracht. Diese ist z.B. in der in Fig. 6 gezeigten Art mit dem Gehäuse verbunden. Das zu messende Fluid wird hier ins Innere des Rohres 3 eingebracht. Die Sonde 1 eignet sich daher vor allem für Fälle, in denen nur kleine Fluidmengen zur Verfügung stehen. Die Sonde 1 nach Fig. 8 entspricht jener nach Fig. 7, wobei jedoch hier der Boden 95 in einem Schwingungsknoten des Resonators 2 angebracht ist.

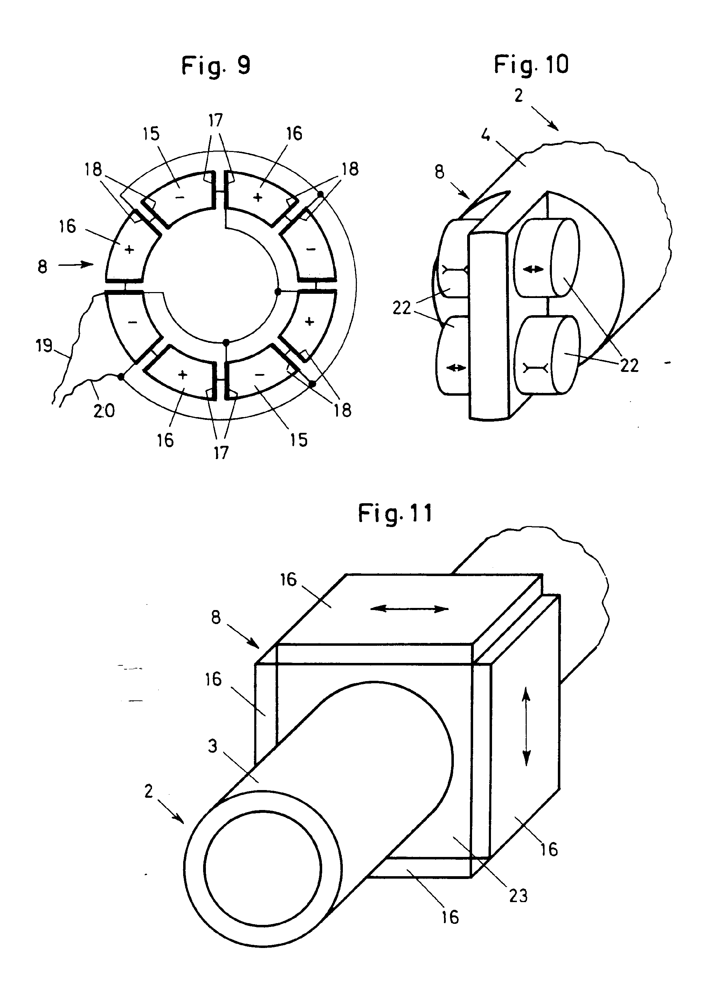

In Fig. 9 ist eine weitere Ausführungsform des Wandlers 8 dargestellt. Der Wandler 8 ist hier aus acht untereinander verbundenen, abwechselnd gegensinnig polarisierten, kreisringsegmentförmigen Scheiben 15, 16 aufgebaut. Als Schwingungserreger ergibt sich bei diesem Aufbau gegenüber der Ausführungsform nach Fig. 2 bei gleichem Signal eine grössere Auslenkung. Bei der Verwendung als Fühler 7 wird eine grössere Empfindlichkeit erreicht. Bei der Ausführungsform nach Fig. 9 ist es jedoch auch möglich, zum Beispiel 2 gegenüberliegende Segmente 15, 16 als Fühler einzusetzten und die übrigen sechs Segmente als Schwingungserreger.

Bei der Ausführungsform nach Fig. 10 sind am Stirnende des Stabes 4 des Resonators 2 vier piezo-keramische Dickenschwinger 22 angebracht. Jeweils 2 diametral gegenüberliegende dieser Schwinger 22 sind gleichphasig erregt, während die andern beiden Schwinger 22 in Gegenphase schwingen. Auch hier kann der nicht dargestellte Fühler 7 gleich aufgebaut sein wie der Schwingungserreger 8. Es können jedoch auch zwei der Dickenschwinger 22 als Fühler verwendet werden.

Die Ausführungsform nach Fig. 11 entspricht grundsätzlich jener nach Fig. 9, nur dass hier die piezoelektrischen Scher-Scheiben 16 auf den Seitenflächen eines regulären, koaxial zum Rohr 3 des Resonators 2 auf diesem befestigten Prismas 23 befestigt sind.

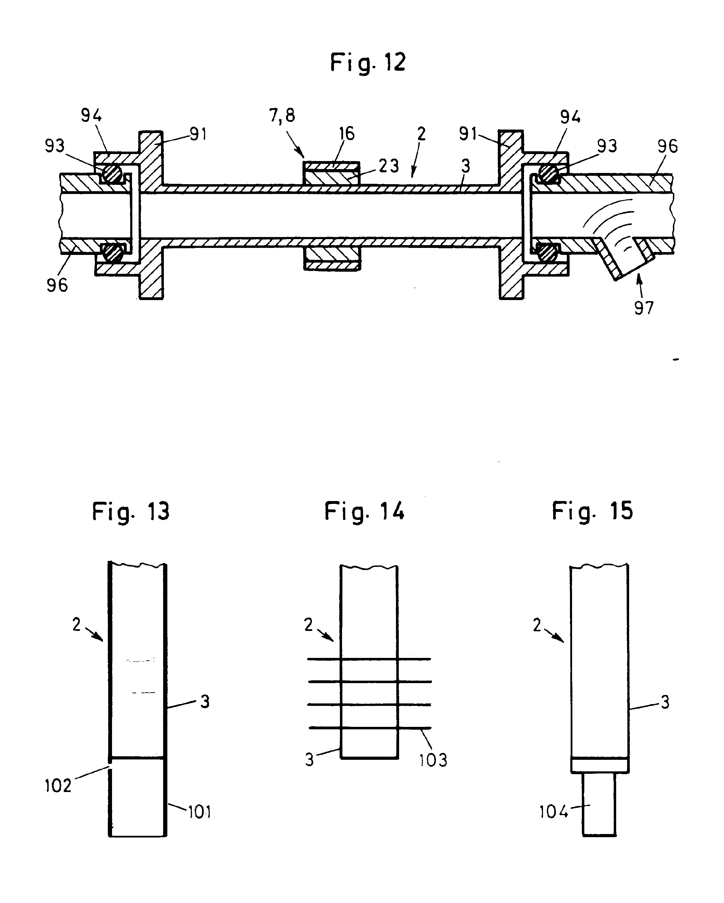

Besonders zweckmässig ist der Wandler 8 nach Fig. 11 bei der Ausführungsform des Resonators 2 nach Fig. 12. Der Resonator 2 besteht hier lediglich aus dem Rohr 3, das beidseitig an je einer Schwungmasse 91 befestigt ist. Von jeder Schwungmasse 91 steht gegen aussen ein koaxialer, rohrförmiger Ansatz 91 ab. Dieser ist auf einem elastomeren O-Ring 93 elastisch abgestützt. Der O-Ring 93 sitzt in einer Umfangsnut eines Anschlussrohres 96. Im dargestellten Beispiel sitzt das Prisma 23 des Wandlers 8 in der Mitte des Rohres 3. Beim Erregen der Torsionseigenschwingung des Rohres 3 bilden sich an den beiden Schwungmassen 91 zwei Knoten aus und in der Rohrmitte das Amplitudenmaximum. Durch die torsionsweiche Federung auf den O-Ringen 93 in Verbindung mit den Schwungmassen 91 wird die Schwingungsisolation von der Aussenwelt erreicht. Vorzugsweise ist die Eigenfrequenz des Resonators 2 um mehrere Grössenordnungen höher als die durch die Federkonstante der O-Ringe 93 und die Schwungmasse 91 definierte Eigenfrequenz. Durch diese Ausbildung können Dämpfungseinflüsse der Anschlussrohre 96 wirksame abgeschottet werden.

Die Ausführungsform nach Fig. 12 ermöglicht die Viskositätsmessung eines durchlaufenden Fluids, beispielsweise einer durchlaufenden Flüssigkeit. Am rechten Anschlussrohr 96 ist schematisch noch ein Ultraschallfühler 97 dargestellt, mit welchem gleichzeitig noch das Geschwindigkeitsprofil über den Querschnitt ermittelt werden kann, zur Ermittlung der Abhängigkeit der Viskosität vom Schergefälle. Statt auf der halben Länge des Rohres 3 kann der Schwingungserreger 8 auch auf einem Viertel der Rohrlänge angeordnet werden. Damit lässt sich im Rohr 3 die erste Oberschwingung anregen. Schwingungserreger 8 und Fühler 7 können in diesem Fall räumlich getrennt in den beiden Schwingungsbäuchen befestigt werden. Bei der Ausführungsform nach Fig. 12 ist es auch möglich statt einer Torsionsschwingung eine Longitudinalschwingung des Rohres 3 zu verwenden. Dazu würden z. B. die piezoelektrischen Scheiben 16 bei der Ausführungsform nach Fig. 11 um 90 Grad gedreht.

In den Figuren 13 und 14 sind zwei Möglichkeiten dargestellt, wie die vom zu messenden Fluid benetzte Oberfläche des Resonators 2 vergrössert werden kann. Dies ist vor allem bei Messungen im Bereich sehr geringer Viskositäten vorteilhaft. Bei der Ausführungsform nach Fig. 13 hat das Rohr 3 des Resonators 2 einen rohrförmigen Ansatz 101. Eine Oeffnung 102 sorgt für eine Entlüftung des Innenraums dieses Ansatzes beim Eintauchen des Resonators 2 in eine Flüssigkeit. Bei der Variante nach Fig. 14 sind auf dem Rohr 3 des Resonators 2 kreisringförmige Lamellen 103 befestigt.

Bei der Ausführungsform nach Fig. 15 ist unten am Rohr 3 des Resonators 2 ein zylinderischer Ansatz 104 lösbar befestigt, zum Beispiel aufgeschraubt oder mit einem Sekundenkleber aufgeklebt. Der Ansatz 104 ist gedacht als Wegwerfspitze. Diese Auführungsform eignet sich z.B. zur Messung der Viskosität eines Kunstharzes während des Aushärtprozesses.

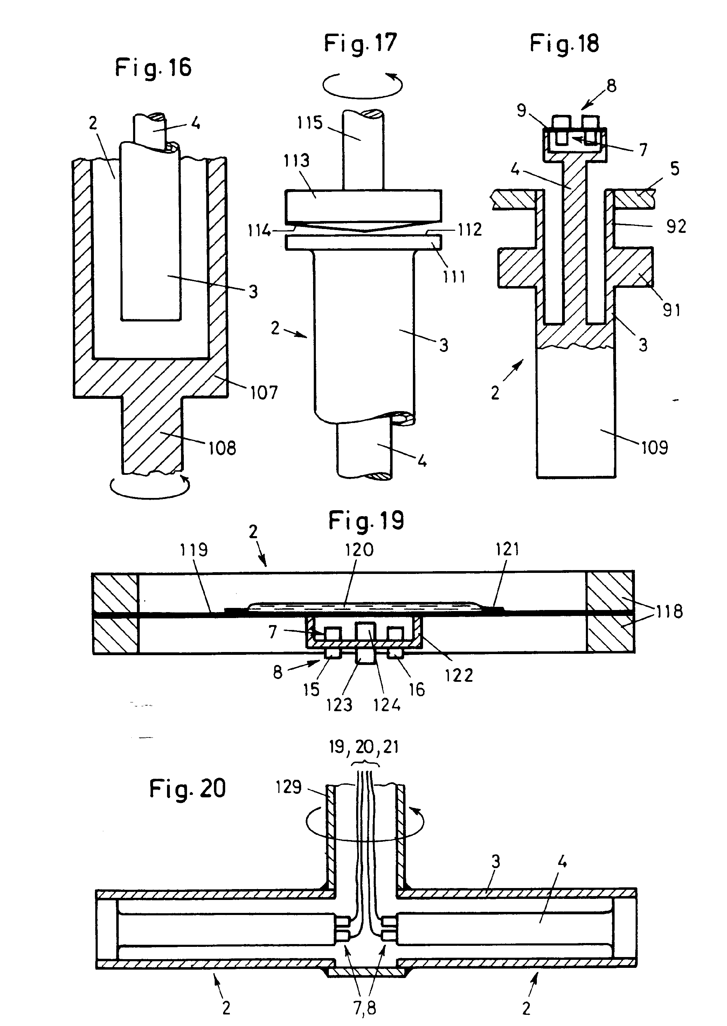

Bei der Ausführungsform nach Fig. 16 wird die zu vermessende Flüssigkeit in ein zylinderisches Gefäss 107 eingefüllt. Das Gefäss 107 ist koaxial zum Rohr 3 des Resonators 2. Es sitzt auf einer koaxialen Welle 108, die mit einer einstellbaren Geschwindigkeit oder einem einstellbaren Moment angetrieben ist. Dadurch eignet sich diese Ausführungsform zur Bestimmund der Viskosität thixotroper Stoffe.

Die Ausführungsform nach Fig. 18 ist analog der Ausführungsform nach Fig. 6 aufgebaut, nur hat das Rohr 3 unten einen massiv zylinderischen, koaxialen Ansatz 109. Diese Ausführungsform ist vor allem für höhere Viskositätsbereiche geeignet. Der Hals 92 wird widerum sehr torsionsweich ausgebildet, so dass die durch seine Federkonstante und das Trägheitsmoment der Schwungmasse 91 bestimmte Eigenfrequenz um mindestens eine Grössenordnung tiefer als die Eigenfrequenz des Resonators 2 liegt. Wenn dieser Hals 92 aus Metall ausgebildet wird, eignen sich dazu insbesondere Dämpfungslegierungen, z.B. ferromagnetische Eisen-Chrom-Aluminium-Legierungen.

In Fig. 17 ist eine Ausführungsform zur Messung der Viskosität kleiner Proben von Flüssigkeit dargestellt. Der Resonator 2 ist hier umgedreht und hat sein freies Ende oben. Am Rohr 3 ist oben ein Flansch 111 mit einer ebenen Stirnfläche 112 befestigt. Koaxial zum Flansch 111 ist eine Scheibe 113 auf einer Welle 115 befestigt. Die der Stirnfläche 112 zugewandte Stirnfläche 114 der Scheibe 113 ist leicht konisch. Die Spitze dieses Konus hat nur einen geringen Abstand von der Stirnseite 112. Ein zwischen die Flächen 112, 114 eingeführter Tropfen einer Testflüssigkeit zentriert sich durch die Kapillarwirkung. Die Ausführungsform nach Fig. 17 eignet sich insbesondere zum Messen hoher Viskositäten. Wenn die Welle 115 gedreht wird, kann ebenfalls wieder die Abhängigkeit der Viskosität von der Schergeschwindigkeit untersucht werden.

Bei der Ausführungsform nach Fig. 19 ist der Resonator 2 als kreisförmige flache Membran 119 aus Metall ausgebildet. Die Membran 119 ist zwischen zwei Ringen 119 eingespannt. Die Testflüssigkeit 120 kann beispielsweise bloss als dünner Film auf die Membran 119 aufgelegt werden. Zum Zentrieren dieser Flüssigkeit 120 kann die Membran 119 beispielsweise eine ringförmige Beschichtung 121 aus einem flüssigkeitsabstossenden Stoff, zum Beispiel Silicongummi aufweisen. Auf der Unterseite der Membran 119 ist an dieser ein topfförmiger Träger 122 befestigt. Der Träger 122 trägt analog dem Isolierplättchen 9 in Fig. 6 den Wandler 8 und den Fühler 7. Der Wandler 8 erzeugt eine Torsionsschwingung auf die Membran 119 und besteht beispielsweise wiederum aus Scheiben 15, 16 entsprechend der Ausführungsform nach Fig. 2 oder 9. Zusätzlich kann zentrisch auf dem Träger 122 ein Dickenschwinger 123 befestigt sein, welcher Schwingungen der Membran 119 senkrecht zu ihrer Fläche erregt. Diese Schwingungen können durch einen weiteren Fühler 124 gemessen werden. Durch diese senkrecht zur Oberfläche der Membran 119 gerichteten Schwingungen kann zusätzlich die Dichte der Probeflüssigkeit 120 gemessen werden.

Bei der Ausführungsform nach Fig. 20 sind zwei Resonatoren 2 koaxial und entgegengesetzt gerichtet am unteren, freien Ende einer rohrförmigen Welle 129 befestigt. Die Schwingungserreger 8 dieser Resonatoren 2 können um 180 Grad phasenverschoben erregt werden. Die beiden Resonatoren 2 bilden daher eine Torsions-Stimmgabel. Durch Drehen der Welle 129 wirken die beiden Resonatoren 2 als Rührwerk. Damit kann ebenfalls die Viskosität thixotroper Stoffe, z.B. von nicht abgebundenem Beton, untersucht werden.

Das beschriebene Verfahren eignet sich allgemein zur Messung der Dämpfung eines Resonators. Unter den Begriff "Fluid" fallen Gase, newtonsche und nicht-newtonsche Flüssigkeiten sowie viskoelastische Stoffe. Als phasenempfindlicher Detektor eignet sich auch ein analoger Multiplizierer oder ein exklusives ODER-Glied, wobei das Analogsignal des Fühlers 7 über einen Begrenzer und einen Verstärker an den einen Eingang des Gliedes angelegt ist. Für den phasenverketteten Kreis 79, wie auch für den phasenempfindlichen Detektor 28 eignen sich auch gewisse in "Theorie und Anwendung des Phase Locked Loop" von Roland Best, AT-Verlag, Aarau 1981 beschriebenen Varianten.

In Fig. 21 ist eine weitere Ausführungsform eines Wandlers 8 dargestellt. Es unterscheidet sich vom Wandler 8 nach Fig. 2 dadurch, dass die segmentierten, piezoelektrischen, keramischen Scheiben 15′, 16′ nur Viertelkreissegmente, an der Peripherie des Stabes 4 angebracht und radial polarisiert sind. Dabei wechseln sich die Polarisationsrichtungen 132, 133 ab, sind also bei aufeinanderfolgenden Scheiben 15′, 16′ abwechselnd nach aussen und innen gerichtet.

**Patentansprüche**

1. Viskosimeter mit einem parallel zu seiner Oberfläche schwingenden Resonator (2), einem mit diesem gekoppelten, mit einem Oszillator (25) verbundenen Schwingungserreger (8), der ein mit dem Resonator (2) starr verbundener piezoelektrischer Wandler ist, und einem Fühler (7) zum Messen der Schwingung des Resonators (2), dadurch gekennzeichnet, dass die Eigenfrequenz des Schwingungserregers (8) um ein Vielfaches höher ist als die Resonatoreigenfrequenz.

2. Viskosimeter nach Anspruch 1, dadurch gekennzeichnet, dass der Resonator (2) mindestens an einem Ende an einer Schwungmasse (91) befestigt ist, die über eine Feder (92,93) mit einer Einspannstelle (5,96) verbunden ist, und dass die Resonatoreigenfrequenz um ein Vielfaches über der durch die Schwungmasse (91) und die Feder (92,93) definierten Eigenfrequenz liegt.

3. Viskosimeter nach Anspruch 1 oder 2, dadurch gekennzeichnet, dass der Fühler (7) als piezoelektrischer Wandler ausgebildet ist.

4. Viskosimeter nach einem der Ansprüche 1 bis 3, dadurch gekennzeichnet, dass er einen Rückkopplungskreis (25,35,28,31) zum Stabilisieren der Schwingungsfrequenz des Resonators (2) aufweist, umfassend den Oszillator (25) dessen Frequenz durch ein Eingangssignal an seinem Eingang (26) steuerbar ist und dessen Ausgang (43) mit dem Schwingungserreger (8) und über einen Phasenschieber (35), der die Phase seiner Eingangsschwingung um einen von zwei wahlweise schaltbaren Werten verschiebt, mit einem phasenempfindlichen Detektor (28) verbunden ist, dessen zweiter Eingang mit dem Fühler (7) verbunden ist, und dessen Ausgang über einen Integrator (31) auf den Steuereingang (26) des Oszillators (25) zurückgeführt ist, und dass das Viskosimeter eine Auswertschaltung (67) enthält, die den Unterschied der Schwingungsfrequenz des Resonators (2) bei den beiden Werten der Phasenverschiebung ermittelt.

5. Viskosimeter nach einem der Ansprüche 1 bis 4, dadurch gekennzeichnet, dass der Resonator (2) ein rotationssymmetrischer Torsionsschwinger ist.

6. Viskosimeter nach einem der Ansprüche 1 bis 5, dadurch gekennzeichnet, dass der Schwingungserreger (8) aus mehreren elektrisch miteinander verbundenen Segmenten (15,16) besteht.

7. Viskosimeter nach einem der Ansprüche 1 bis 6, dadurch gekennzeichnet, dass am Resonator (2) Fortsätze (101, 103) zur Vergrösserung seiner Oberfläche angebracht sind.

8. Viskosimeter nach einem der Ansprüche 1 bis 7, dadurch gekennzeichnet, dass der Resonator (2) als beidseitig offenes, von dem zu messenden Fluid durchströmtes Rohr (3) ausgebildet ist, und dass der Schwingungserreger (8) an der Aussenfläche des Rohres (3) zwischen seinen beiden Enden befestigt ist.

9. Viskosimeter nach einem der Ansprüche 1 bis 7, dadurch gekennzeichnet, dass der Resonator (2) eine flache, kreisförmige Membran (119) ist.

10. Viskosimeter nach einem der Ansprüche 1 bis 7, dadurch gekennzeichnet, dass der Resonator (2) als Rührelement ausgebildet ist.

11. Viskosimeter nach einem der Ansprüche 1 bis 10, da durch gekennzeichnet, dass der Schwingungserreger (8) und/oder der Fühler (7) ein piezoelektrischer Scher- Transducer ist, der aus mehreren ringförmigen Segmenten (15,16) besteht.

12. Viskosimeter nach Anspruch 11, dadurch gekennzeichnet, dass die aneinander grenzenden Segmente (15,16) ent gegengesetzt polarisiert sind.

**Claims**

1. Viscometer having a resonator (2) vibrating parallel to its surface, a vibration exciter (8), which is coupled to said resonator, connected to an oscillator (25) and is a piezoelectric transducer rigidly connected to the resonator (2), and a sensor (7) for measuring the vibration of the resonator (2), characterised in that the natural frequency of the vibration exciter is a multiple higher than the natural frequency of the resonator.

2. Viscometer according to Claim 1, characterised in that the resonator (2) is attached at at least one end to a vibrating mass (91) which is connected via a spring (92, 93) to a clamping point (5, 96), and in that the natural frequency of the resonator is a multiple higher than the natural frequency defined by the vibrating mass (91) and the spring (92, 93).

3. Viscometer according to Claim 1 or 2, characterised in that the sensor (7) is constructed as a piezoelectric transducer.

4. Viscometer according to one of Claims 1 to 3, characterised in that it has a feedback loop (25, 35, 28, 31) for stabilising the vibration frequency of the resonator (2), comprising the oscillator (25), whose frequency can be controlled by an input signal at its input (26) and whose output (43) is connected to the vibration exciter (8) and, via a phase shifter (35) which shifts the phase of its input oscillation by one of two optionally switchable values, to a phase-sensitive detector (28) whose second input is connected to the sensor (7) and whose output is fed back via an integrator (31) to the control input (26) of the oscillator (25), and in that the viscometer contains an evaluation circuit (67) which determines the difference in the vibration frequency of the resonator (2) for the two values of the phase shift.

5. Viscometer according to one of Claims 1 to 4, characterised in that the resonator (2) is a rotationally symmetric torsional vibrator.

6. Viscometer according to one of Claims 1 to 5, characterised in that the vibration exciter (8) consists of a plurality of segments (15, 16) electrically connected to one another.

7. Viscometer according to one of Claims 1 to 6, characterised in that extensions (101, 103) are attached to the resonator (2) in order to increase its surface.

8. Viscometer according to one of Claims 1 to 7, characterised in that the resonator (2) is constructed as a tube (3) which is open at both ends and through which the fluid to be measured flows, and in that the vibration exciter (8) is attached to the outer surface of the tube (3) between its two ends.

9. Viscometer according to one of Claims 1 to 7, characterised in that the resonator (2) is a flat, circular diaphragm (119).

10. Viscometer according to one of Claims 1 to 7, characterised in that the resonator (2) is constructed as a stirring element.

11. Viscometer according to one of Claims 1 to 10, characterised in that the vibration exciter (8) and/or the sensor (7) is a piezoelectric shear transducer which consists of a plurality of annular segments (15, 16).

12. Viscometer according to Claim 11, characterised in that the juxtaposed segments (15, 16) are of opposite polarity.


## Revendications

1. Viscosimètre, comprenant un résonateur (2) oscillant parallèlement à sa surface, un excitateur d'oscillations (8) couplé à ce résonateur (2) et relié à un oscillateur (25), l'excitateur d'oscillations (8) étant un transducteur piézoélectrique rigidement assemblé au résonateur (2), et un capteur (7) pour mesurer l'oscillation du résonateur (2), caractérisé en ce que la fréquence propre de l'excitateur d'oscillations est épale à un multiple de la fréquence propre du résonateur.

2. Viscosimètre selon la revendication 1, caractérisé en ce que le résonateur (2) est fixé, au moins à une extrémité, à une masse d'inertie (91) qui est reliée par un ressort (92, 93) à un point d'encastrement (5, 96), et en ce que la fréquence propre du résonateur est épale à un multiple de la fréquence propre définie par la masse d'inertie (91) et le ressort (92, 93).

3. Viscosimètre selon la revendication 1 ou 2, caractérisé en ce que le capteur (7) est réalisé sous forme de transducteur piézoélectrique.

4. Viscosimètre selon l'une des revendications 1 à 3, caractérisé en ce qu'il présente un circuit réactif (25, 35, 28, 31) pour stabiliser la fréquence d'oscillation du résonateur (2), comprenant l'oscillateur (25), dont la fréquence peut être commandée par un signal d'entrée à son entrée (26) et dont la sortie (43) est reliée à l'excitateur d'oscillations (8) et, par l'intermédiaire d'un déphaseur (35) qui décale la phase de son oscillation d'entrée d'une de deux valeurs pouvant être au choix enclenchées, à un détecteur (28) sensible à la phase, dont la seconde entrée est reliée au capteur (7) et dont la sortie est ramenée, par l'intermédiaire d'un intégrateur (31), à l'entrée de commande (26) de l'oscillateur (25), et en ce que le viscosimètre contient un montage évaluateur (67), qui détermine la différence de la fréquence d'oscillation du résonateur (2) pour les deux valeurs du déphasage.

5. Viscosimètre selon l'une des revendications 1 à 4, caractérisé en ce que le résonateur (2) est un oscillateur en torsion à symétrie de révolution.

6. Viscosimètre selon l'une des revendications 1 à 5, caractérisé en ce que l'excitateur d'oscillations (8) est constitué de plusieurs segments (15, 16) électriquement reliés entre eux.

7. Viscosimètre selon l'une des revendications 1 à 6, caractérisé en ce que des prolongements (101, 103) sont prévus sur le résonateur (2 ) afin d'augmenter sa surface.

8. Viscosimètre selon l'une des revendications 1 à 7, caractérisé en ce que le résonateur (2) est réalisé sous forme de tube (3) ouvert des deux côtés, traversé par le fluide à mesurer, et en ce que l'excitateur d'oscillations (8) est fixé sur la face extérieure du tube (3), entre ses deux extrémités.

9. Viscosimètre selon l'une des revendications 1 à 7, caractérisé en ce que le résonateur (2) est une membrane (119) plate et circulaire.

10. Viscosimètre selon l'une des revendications 1 à 7, caractérisé en ce que le résonateur (2) est réalisé sous forme d'élément agitateur.

11. Viscosimètre selon l'une des revendications 1 à 10, caractérisé en ce que l'excitateur d'oscillations (8) et/ou le capteur (7) est un transducteur piézoélectrique transversal, qui est constitué de plusieurs segments annulaires (15, 16).

12. Viscosimètre selon la revendication 11, caractérisé en ce que les segments limitrophes (15,16) sont polarisées en directions inverses.

## Fig. 1

## Fig. 3

## Fig. 2

## Fig. 21

Fig. 4

## Fig. 5

## Fig. 6

## Fig. 7

## Fig. 8

# Fig. 9

# Fig. 10

# Fig. 11

Fig. 12

Fig. 13

Fig. 14

Fig. 15

Fig.16

Fig.17

Fig.18

Fig.19

Fig.20